## Europäisches Patentamt

(19) **European Patent Office**

**Office européen des brevets**

(11) Veröffentlichungsnummer: **0 038 986**

**A2**

(12) # EUROPÄISCHE PATENTANMELDUNG

(21) Anmeldenummer: **81102794.5**

(22) Anmeldetag: **11.04.81**

(51) Int. Cl.³: **C 08 G 65/30**
**B 01 D 17/04**

(30) Priorität: **25.04.80 DE 3016112**

(43) Veröffentlichungstag der Anmeldung:
**04.11.81 Patentblatt 81/44**

(84) Benannte Vertragsstaaten:
**BE DE FR GB IT NL**

(71) Anmelder: **BAYER AG**
**Zentralbereich Patente, Marken und Lizenzen**
**D-5090 Leverkusen 1, Bayerwerk(DE)**

(72) Erfinder: **Hetzel, Hartmut, Dr.**
**Lübecker Strasse 13**
**D-5000 Köln 40(DE)**

(72) Erfinder: **Gupta, Pramod, Dr.**
**Langemarckstrasse 27**
**D-5152 Bedburg/Erft(DE)**

(72) Erfinder: **Nast, Roland, Dr.**
**Saarwerdenstrasse 47**
**D-4047 Dormagen 5(DE)**

(72) Erfinder: **Echterhof, Herbert**
**Stettiner Strasse 4**
**D-5140 Erkelenz(DE)**

(54) **Verfahren zur Aufarbeitung von Polyetherpolyolen.**

(57) Verfahren zur Entfernung von wäßrigen Lösungen von Alkalisalzen aus Rohpolyether-Emulsionen, die erhalten worden sind, indem man den Rohpolyethern Säuren, Wasser und gegebenenfalls Lösungsmittel zusetzt, dadurch gekennzeichnet, daß man

a) dem alkalischen Polymerisat bei der Neutralisation neben den Säuren insgesamt 1 bis 30 Gew.-% Wasser, mindestens jedoch soviel, daß die bei der Neutralisation gebildeten Salze in Lösung bleiben, sowie 0 bis 30 Gew.-% eines inerten organischen Lösungsmittels zusetzt,

b) die so gebildete Wasser-in-Öl-Emulsion auf eine Temperatur von mindestens 70°C erwärmt,

c) die wäßrige Phase koalisiert und im Anschluß daran von der organischen Phase abtrennt

d) das restliche Wasser sowie das gegebenenfalls mitverwendete organische Lösungsmittel abdestilliert und das dabei ausgefallene restliche Salz abfiltriert.

EP 0 038 986 A2

0038986

BAYER AKTIENGESELLSCHAFT     5090 Leverkusen, Bayerwerk

Zentralbereich
Patente, Marken und Lizenzen   Sft-by-c

Verfahren zur Aufarbeitung von Polyetherpolyolen

Die vorliegende Erfindung betrifft ein neuartiges Verfahren zur Entfernung von wäßrigen Lösungen von Alkalisalzen aus Rohpolyether-Emulsionen, wie sie bei der Neutralisation von durch basisch katalysierte Alkoxylierungsreaktionen hergestellten Polyetherpolyolen entstehen.

Polyalkylenoxidpolyether werden in der Praxis hauptsächlich als Ausgangskomponenten für die Herstellung von gegebenenfalls verschäumten Polyurethankunststoffen eingesetzt. Die Polyether werden dabei, gegebenenfalls stufenweise sowie gegebenenfalls unter Zusatz von Additiven, mit Polyisocyanaten zur Reaktion gebracht. Um die Polyisocyanat-Polyadditionsreaktion nicht nachteilig zu beeinflussen und um das Eigenschaftsbild der Polyurethankunststoffe nicht zu beeinträchtigen, ist es im allgemeinen erforderlich, daß die Polyetherpolyole weitgehend frei von chemischen Verunreinigungen sind.

Großtechnisch werden Polyetherpolyole meist durch Anlagerung von Alkylenoxiden (insbesondere Propylenoxid und/oder Ethylenoxid) an Starterverbindungen mit aciden Wasserstoffatomen (z.B. Wasser, Polyalkohole oder

Le A 20 285 -Ausland

Polyamine) in Gegenwart von basischen Substanzen (in
der Regel Alkalihydroxiden) als Katalysator hergestellt. Die übliche Katalysatorkonzentration beträgt
dabei ca. 0,1 bis 1,0 Gew.-% (1000 bis 10 000 ppm).
Nach Abschluß der Alkoxylierungsreaktion müssen die
Polyetherpolyole dann aus den oben erwähnten Gründen
so aufgearbeitet werden, daß die Konzentration der
basischen Substanzen im Fertigprodukt möglichst auf
etwa 0,0005 % (5 ppm) oder noch darunter reduziert wird.

Bei einem der derzeit üblichen Aufarbeitungsverfahren
wird der basische Katalysator (z.B. KOH) aus dem alkalischen Polymerisat in mehreren Verfahrensschritten entfernt: Zunächst wird das Polymerisat (z.B. mit verdünnter
Schwefelsäure) neutralisiert, wonach die Hauptmenge
Wasser unter gleichzeitiger Kristallisation der anorganischen Salze (z.B. Kaliumsulfat) abdestilliert
wird. Das ausgefallene Salz wird abfiltriert, worauf
das restliche Wasser abdestilliert und die Restmenge
an Salz durch Filtration entfernt wird.

Die Nachteile dieser bekannten Neutralisationsverfahren sind zum einen ein sehr hoher Energieverbrauch
beim Destillieren des Wassers. Zum andern ist es aufwendig, das meist sehr feinteilige Salz abzufiltrieren.
Außerdem ist das Salz mit Polyether vermischt, so daß sowohl Produktverluste als auch große Kosten zur Abfallbeseitigung auftreten (siehe auch US-PS 3 833 669).

Die angeführten Nachteile werden in einem Verfahren nach
US-PS 3 715 402 umgangen, bei dem die wäßrige Lösung von
Alkalisalzen durch Verwendung einer hochtourigen Zentrifuge abgetrennt wird. Hiermit handelt man sich jedoch

Le A 20 285

andere, schwerwiegende Nachteile ein.

Zentrifugen sind sehr komplizierte Maschinen und erfordern daher einen großen Investitions-, Reparatur- und Wartungsaufwand. Zum Antrieb ist eine hohe elektrische Leistung erforderlich, bei den notwendigen hohen Drehzahlen treten Probleme mit der Abdichtung auf. Außerdem ist der Betrieb einer Zentrifuge sehr lärmintensiv.

Die Erfindung liegt somit die Aufgabe zugrunde, unter Vermeidung der beschriebenen Schwierigkeiten ein neues, einfaches und wirtschaftliches Verfahren zur Verfügung zu stellen, welches die weitgehende Entfernung von neutralisierten wäßrigen Lösungen von alkalischen Katalysatoren aus den Rohpolyether-Emulsionen gestattet. Diese Aufgabe wird mittels des erfindungsgemäßen Verfahrens gelöst.

Gegenstand der vorliegenden Erfindung ist ein Verfahren zur Entfernung von wäßrigen Lösungen von Alkali-Salzen aus Rohpolyether-Emulsionen, die erhalten worden sind, indem man den Rohpolyethern Säuren, Wasser und gegebenenfalls Lösungsmittel zusetzt, welches dadurch gekennzeichnet ist, daß man

a) dem alkalischen Polymerisat bei der Neutralisation neben den Säuren insgesamt 1 bis 30 Gew.-%, bevorzugt 2 bis 15 Gew.-%, Wasser (mindestens jedoch soviel, daß die bei der Neutralisation entstehenden Salze in Lösung bleiben), sowie gegebenenfalls 0 bis 30 Gew.-%, vorzugsweise 3 bis 10

Le A 20 285

Gew.-%, bezogen auf Polymerisat, eines inerten
organischen Lösungsmittels zusetzt,

b) die so gebildete Wasser-in-Öl-Emulsion auf eine
Temperatur von mindestens 70°C, bevorzugt 85 bis
130°C, erwärmt

c) die wäßrige Phase koalisiert und im Anschluß
daran von der organischen Phase abtrennt und

d) das restliche Wasser sowie das gegebenenfalls
mitverwendete organische Lösungsmittel abdestilliert
und das dabei ausgefallene restliche Salz abfiltriert.

In der ersten Stufe des erfindungsgemäßen Verfahrens
wird dem alkalischen Polymerisat die Säure sowie die
erforderliche Menge Wasser unter Rühren zugesetzt.
Es bildet sich sofort eine milchig-trübe, stabile Emulsion. Gegebenenfalls kann die Viskosität der Rohpolyether-Emulsion durch Zusatz von geringen Mengen eines
inerten, organischen Lösungsmittels (vorzugsweise Toluol)
herabgesetzt werden.

Als Säuren kommen dabei vorzugsweise Mineralsäuren (insbesondere Schwefelsäure) aber auch organische Säuren
(z.B. Weinsäure oder Essigsäure) oder $CO_2$ in Betracht.
Vorzugsweise setzt man soviel Säure zu, daß ein pH-Wert
von ca. 4-9 erreicht wird. Die Menge an Wasser muß dabei
mindestens so groß sein, daß die bei der Neutralisation
entstehenden Salze in Lösung bleiben.

Le A 20 285

Ein erfindungswesentlicher Schritt besteht darin, die in der ersten Stufe des erfindungsgemäßen Verfahrens erhaltene Emulsion auf eine Temperatur von mindestens 70°C, vorzugsweise 85 bis 130°C, zu erwärmen. Bei dieser Temperatur ist es möglich, mittels der nachstehend näher beschriebenen Koalisiervorrichtung die fein verteilten Tröpfchen der wäßrigen Lösung von Alkalisalzen zu koalisieren und die Emulsion in eine wäßrige und organische Phase aufzutrennen. Die wäßrige Phase kann leicht von der organischen abgeschieden werden, wobei Restsalzgehalte in der organischen Phase von unter 100 ppm erreicht werden können.

Die erfindungsgemäß zum Koalisieren der wäßrigen Phase benutzte Vorrichtung besteht aus einem aus Fasern aufgebauten Flächengebilde, wobei die Fasern möglichst fein und vorzugsweise gegenüber verdünnten Laugen und Säuren (falls der Rohpolyether nicht auf pH 7 neutralisiert wird) beständig sein sollen. Vorzugsweise liegt ihre Dicke unter 50$\mu$m, besonders bevorzugt zwischen 1 und 10$\mu$m. Die Dicke der Faserschicht soll vorzugsweise zwischen 1 und 100 mm betragen, entsprechend einem Flächengewicht von ca. 100 bis 10000 g/m$^2$. Bewährt haben sich Matten aus Asbest- und Glasfasern, die bei einer Dicke von 20-100 mm ein Flächengewicht von ca. 3000 g/m$^2$ besitzen, sowie solche aus leicht gesintertem Metallvlies (z.B. Stahl, Kupfer oder Nickel), die bei einer Dicke von ca. 1-10 mm ein Flächengewicht von 750 g/m$^2$ aufweisen. Die Durchflußgeschwindigkeit der Emulsion durch die Fasermatte liegt zweckmäßigerweise zwischen etwa 1 und 20 m/h (bezogen auf den leeren Querschnitt). Selbstverständlich können auch Fasermaterialien aus

<u>Le A 20 285</u>

hydrolysebeständigen Kunststoffen (z.B. Teflon, Polypropylen oder Polyamid) eingesetzt werden.

Der in dieser Weise behandelte Polyether bildet mit
der abgeschiedenen wäßrigen Phase eine scharfe Phasengrenze und läßt sich somit leicht abtrennen. Die Endbehandlung des abgeschiedenen Polyetherpolyols kann
dann leicht auf bekanntem Weg durch Filtration und
Destillation erfolgen, um restliche Spuren von Salzen,
Alkali, Wasser und Lösungsmittel zu entfernen.

Selbstverständlich ist es aber auch möglich, nach neuerlichem Zusatz von Wasser den bereits weitgehend gereinigten Polyether nochmals in eine Wasser-in-Öl-Emul-
sion überzuführen und nach vorheriger Wärmebehandlung
ein zweites Mal durch die Koalisierapparatur zu schicken.

Das erfindungsgemäße Verfahren bietet gegenüber dem
Stand der Technik folgende wesentliche Vorteile:

Geringer Energieverbrauch (Destillation nur im geringem
Umfang erforderlich);

nur Spuren von festem Alkalisalz im Polyether, daher
minimaler Aufwand für die Filtration;

nur sehr geringer Investitionsaufwand für die Koalisiervorrichtung; keine beweglichen Teile, daher kein Antrieb und keine rotierenden Dichtungen erforderlich;

kaum Wartungs- und Reparaturaufwand.

0038986

Das erfindungsgemäße Verfahren ist auf beliebige Polyether (z.B. auf Basis von Ethylen-, Propylen- und/oder Butylenoxid) anwendbar, die mit Wasser nicht vollständig mischbar sind sondern bei der Neutralisation mit wäßriger Säure eine Emulsion ausbilden. Dies ist in der Regel bei kurzkettigen Polyethern (Molekulargewicht ca. 300) dann der Fall, wenn sie keine Ethylenoxideinheiten enthalten, bei mittleren Molekulargewichten (ca. 4000), wenn sie weniger als 20 % und bei höheren Molekulargewichten (MG ca. 20000), wenn sie weniger als ca. 40 % an Ethylenoxideinheiten aufweisen.

Die nachfolgenden Beispiele dienen zur Erläuterung des erfindungsgemäßen Verfahrens. Wenn nicht anders vermerkt, sind Mengenangaben als Gewichtsteile bzw, Gewichtsprozente zu verstehen.

Le A 20 285

Beispiel 1

6000 g einer mit verdünnter Schwefelsäure neutralisierten Emulsion eines Rohpolyethers (trifunktioneller Polyether auf Basis Trimethylolpropan, alkoxiliert mit 15 % Ethylenoxid und 85 % Propylenoxid; OH-Zahl 35) mit einem pH-Wert von 6,8, einem Wassergehalt von ca. 11 % und einem Salzgehalt von 8100 ppm, bezogen auf Polyether, werden in einem 10 1-Rundkolben unter Rühren unter Stickstoffatmosphäre auf ca. 100°C aufgeheizt und Die Gesamtmenge der Emulsion wird dann mittels einer Zahnraddosierpumpe durch ein Glasrohr gedrückt, in das eine Koalisiermembran eingespannt ist. Die Koalisiermembran besteht aus einer leicht gepreßten Glasfasermatte mit einer Dicke von ca. 50 mm bei einem Flächengewicht von 3000 g/m². Die Glasfasermatte besteht aus Fasern mit einer Dicke von 4 μm.

Nach Passieren der Koalisiermembran (Durchmesser 50 mm) bei einem Durchsatz von 10 1/h (entsprechend einer Durchflußgeschwindigkeit von 0,51 m/h trennt sich die wäßrige Phase von der organischen ab. Der Restsalzgehalt der Polyetherphase beträgt 6 ppm Kaliumsulfat (bestimmt als Kalium durch Atomabsorptionsspektroskopie); ihr Wassergehalt 5,1 %. (Abscheidegrad für Wasser: 53,6 %; für Kaliumsulfat: 99,9 %).

Beispiel 2

6000 g einer mit verdünnter $H_2SO_4$ neutralisierten Rohpolyetheremulsion (trifunktioneller Polyether auf Basis Glycerin, alkoxiliert mit 15 % Ethylenoxid und 85 % Propylenoxid; OH-Zahl 56) mit einem pH-Wert von 6,8, einem Wassergehalt von 12 % und einem Salzgehalt von 10.250 ppm, bezogen auf Polyether, werden in einem 10 l-Rundkolben vorgelegt und unter Stickstoffatmosphäre 1 Stunde lang auf ca. 100°C aufgeheizt. Die Gesamtmenge der Emulsion wird durch die in Beispiel 1 beschriebene Koalisiermembran gedrückt. Nach dem Passieren der Koalisiermembran tritt eine Phasentrennung ein, wobei der Restsalzgehalt der organischen Phase nur 8 ppm Kaliumsulfat (bestimmt als Kalium durch Atomabsorptions-Spektroskopie) und der Wassergehalt 5,3 %; beträgt. (Abscheidegrad für Wasser: 55,8 %; für Kaliumsulfat: 99,9 %).

### Beispiel 3

6000 g einer mit verdünnter $H_2SO_4$ neutralisierten Emulsion eines Rohpolyethers (trifunktioneller Polyether auf Basis Trimethylolpropan, alkoxiliert mit 10 % Ethylenoxid und 90 % Propylenoxid; OH-Zahl 49) mit einem pH-Wert von 6,7, einem Wassergehalt von 10 % und einem Salzgehalt von ca. 10.100 ppm, bezogen auf Polyether, werden in einem 10 l-Rundkolben vorgelegt und 1 Stunde unter Stickstoffatmosphäre auf ca. 100°C aufgeheizt. Die Gesamtmenge der Emulsion wird durch die in Beispiel 1 beschriebene Koalisiermembran gedrückt. Nach dem Passieren der Koalisiermembran tritt eine Phasentrennung ein, wobei der Restsalzgehalt der organischen Phase 8 ppm Kaliumsulfat (bestimmt als Kalium durch Atomabsorptionsspektroskopie) und der Wassergehalt 3,8 % beträgt. (Abscheidegrad für Wasser: 62 %; für Kaliumsulfat: 99,9 %).

Le A 20 285

Beispiel 4

6000 g einer mit verdünnter $H_2SO_4$ neutralisierten Roh-
polyether-Emulsion (trifunktioneller Polyether auf Basis
Trimethylolpropan, alkoxiliert mit Propylenoxid, OH-Zahl
56) mit einem pH-Wert von 6,7, einem Wassergehalt von
12 % und einem Salzgehalt von 13.780 ppm, bezogen auf
Polyether, werden in einem 10 l-Rundkolben vorgelegt
und 1 Stunde unter Stickstoffatmosphäre auf ca. 100°C
aufgeheizt. Die Gesamtmenge der Emulsion wird durch
die in Beispiel 1 beschriebene Koalisiermembran gedrückt.
Nach dem Passieren der Koalisiermembran tritt eine
Phasentrennung ein, wobei der Restsalzgehalt der organischen Phase 15 ppm Kaliumsulfat (bestimmt als
Kalium durch Atomabsorptionsspektroskopie) und der
Wassergehalt 3,8 % beträgt. (Abscheidegrad für Wasser:
68,4 %; für Kaliumsulfat: 99,9 %).

Beispiel 5 (Vergleichsversuch)

5.840 g einer mit verdünnter $H_2SO_4$ neutralisierten
Emulsion eines Rohpolyethers (trifunktioneller Polyether auf Basis Trimethylolpropan, alkoxiliert mit
15 % Ethylenoxid und 85 % Propylenoxid, OH-Zahl 35)
mit einem pH-Wert von 6,7, einem Wassergehalt von
11 % und einem Salzgehalt von 8100 ppm, bezogen auf
Polyether, werden in einem 10 l-Rundkolben mit 502 g
Toluol (≙ 8,8 %, bezogen auf Polyether) versetzt und
unter Rühren unter Stickstoffatmosphäre auf ca. 100°C
aufgeheizt. Anschließend wird der Rührer stillgesetzt

Le A 20 285

und 3 Stunden gewartet. Dabei fällt die Temperatur auf 85°C. Es werden ca. 40 ml wäßrige Phase abgetrennt. Der Restsalzgehalt in der organischen Phase beträgt 6.157 ppm Kaliumsulfat (bestimmt als Kalium durch Atomabsorptionsspektroskopie), ihr Wassergehalt 10,4 % (Abscheidegrad für Wasser: 5,5 %; für Kaliumsulfat: 24 %).

Patentansprüche

1.  Verfahren zur Entfernung von wäßrigen Lösungen von Alkalisalzen aus Rohpolyether-Emulsionen, die erhalten worden sind, indem man den Rohpolyethern Säuren, Wasser und gegebenenfalls Lösungsmittel zusetzt, dadurch gekennzeichnet, daß man

    a)  dem alkalischen Polymerisat bei der Neutralisation neben den Säuren insgesamt 1 bis 30 Gew.-% Wasser, mindestens jedoch soviel, daß die bei der Neutralisation gebildeten Salze in Lösung bleiben, sowie 0 bis 30 Gew.-% eines inerten organischen Lösungsmittels zusetzt,

    b)  die so gebildete Wasser-in-Öl-Emulsion auf eine Temperatur von mindestens 70°C erwärmt,

    c)  die wäßrige Phase koalisiert und im Anschluß daran von der organischen Phase abtrennt

    d)  das restliche Wasser sowie das gegebenenfalls mitverwendete organische Lösungsmittel abdestilliert und das dabei ausgefallene restliche Salz abfiltriert.

2.  Verfahren nach Anspruch 1, dadurch gekennzeichnet, daß dem alkalischen Polymerisat in der ersten Verfahrensstufe 2 bis 15 Gew.-% Wasser zugesetzt werden.

Le A 20 285

3. Verfahren nach Anspruch 1 und 2, dadurch gekennzeichnet, daß in der ersten Verfahrensstufe 0 bis 30 Gew.-%, bezogen auf Polymerisat, an Toluol zugesetzt werden.

4. Verfahren nach Anspruch 1 bis 3, dadurch gekennzeichnet, daß der Rohpolyether auf einen pH-Wert von ca 4 bis 9 neutralisiert wird.

5. Verfahren nach Anspruch 1 bis 4, dadurch gekennzeichnet, daß die Emulsion in der zweiten Verfahrensstufe auf mindestens 85°C erwärmt wird.

6. Verfahren nach Anspruch 1 bis 4, dadurch gekennzeichnet, daß man in der dritten Verfahrensstufe die wäßrige Phase durch Durchleiten der Emulsion durch ein aus sehr feinen Fasern aufgebautes Flächengebilde mit einem Flächengewicht zwischen 100 und 10000 g/m$^2$ und einer Dicke von 1 - 100 mm koalisiert.

7. Verfahren nach Anspruch 6, dadurch gekennzeichnet, daß die Fasern des Flächengebildes eine Dicke unter 50μm aufweisen.

8. Verfahren nach Anspruch 7, dadurch gekennzeichnet, daß die Fasern des Flächengebildes eine Dicke von 1 bis 10μm aufweisen.

Le A 20 285

9) Verfahren nach Anspruch 6 bis 8, dadurch gekennzeichnet, daß die Durchflußgeschwindigkeit der Emulsion durch das Faser-Flächengebilde 1 bis 20 m/h beträgt.

10) Verfahren nach Anspruch 6 bis 9, dadurch gekennzeichnet, daß das Flächengebilde aus Glas-, Asbest-, Metall- oder hydrolysebeständigen Kunststoffasern aufgebaut ist.

Le A 20 285